# EUROPÄISCHE PATENTSCHRIFT

(11) **EP 3 067 670 B1**
(45) Veröffentlichungstag und Bekanntmachung des Hinweises auf die Patenterteilung: **18.04.2018**
(21) Anmeldenummer: 16155633.7
(22) Anmeldetag: 15.02.2016
(51) Int. Cl.: H01R 13/645, G01D 11/24

(54) **STECKERBAUGRUPPE FÜR EINEN SENSOR UND VERFAHREN ZUR MONTAGE EINER STECKERBAUGRUPPE FÜR EINEN SENSOR**
PLUG ASSEMBLY FOR A SENSOR AND A METHOD OF ASSEMBLING A PLUG ASSEMBLY FOR A SENSOR
COMPOSANT DE CONNECTEUR POUR UN CAPTEUR ET PROCEDE DE MONTAGE D'UN COMPOSANT DE CONNECTEUR POUR UN CAPTEUR

(30) Priorität: 11.03.2015 DE 102015103551
(43) Veröffentlichungstag der Anmeldung: 14.09.2016
(73) Patentinhaber: SICK AG, 79183 Waldkirch (DE)
(72) Erfinder: Marschner, Wolfgang, 79111 Freiburg (DE); Paul, Dominik, 79356 Eichstetten (DE); Gutmann, Frank, 79112 Freiburg (DE)

(56) Entgegenhaltungen:
- EP-A1- 2 034 277
- DE-A1- 10 237 904
- DE-C1- 19 546 865
- DE-U1-202007 012 370

## Beschreibung

Die Erfindung betrifft eine Steckerbaugruppe für einen Sensor nach dem Oberbegriff von Anspruch 1 und ein Verfahren zur Montage einer Steckerbaugruppe für einen Sensor nach dem Oberbegriff von Anspruch 16.

Elektronische Sensoren werden zur Erfassung und Überwachung bestimmter Arbeitsabläufe in industriellem Einsatz vielfältig verwendet. Je nach ihrem Einsatzgebiet gibt es eine Vielzahl unterschiedlicher Sensoren, die sich in ihrem Messbetrieb, ihrem Aufbau und ihrer Größe unterscheiden. So sind berührungslos arbeitende Sensoren, wie beispielsweise induktive Näherungsschalter, bekannt, die einen bestimmten Bereich überwachen oder die Position eines Objektes erfassen. In der Regel werden bei diesen induktiven Näherungsschaltern Steckereinheiten eingesetzt, welche einteilig ausgebildet sind.

Insbesondere, wenn unterschiedlich große Sensorelemente montiert werden sollen, ergeben sich Nachteile, die sehr kostenaufwändig sind. Dabei kann es je nach Ausführung erforderlich sein, dass die Gehäusehülsen in zweiteiliger Ausführung realisiert werden, was zu höheren Kosten führt.

Aus der DE 103 59 885 B4 ist ein Verfahren zur Herstellung eines Schaltgerätes sowie eine Baugruppe für ein Schaltgerät bekannt, bei welchem die Baugruppe von einer Sensoreinheit, einem Trägerelement für eine elektronische Schaltung und einem als Steckereinheit ausgebildeten Anschlussteil gebildet werden. Diese Baugruppe wird vorgefertigt und im zusammengefügten Zustand in eine Gehäusehülse eingeführt. Dabei kann die Baugruppe einmal über eine Messseite in die Gehäusehülse eingeführt werden. Es besteht aber auch die Möglichkeit, die Baugruppe über ein Hinterende der Gehäusehülse in dieses einzuführen. Allerdings besteht dabei der Nachteil, dass für die Einführung der Baugruppe über das Hinterende der Gehäusehülse unterschiedliche Formgebungen des Gehäuses, des Sensorelements und des Anschlussteiles notwendig werden, was zusätzliche Herstellungskosten nach sich zieht. Das als Steckereinheit ausgebildete Abschlussteil sitzt dabei auf der Gehäusehülse außen auf und dichtet deren Innenraum gegen die Umgebung ab.

Die EP 2 034 277 A1 offenbart einen induktiven Sensor mit einer Gehäusehülse und einem Anschlussstück.

Die DE 102 37 904 A1 offenbart einen Näherungsschalter mit einem hülsenförmigen Gehäuse mit einem Steckeranschluss.

Die DE 20 2007 012 370 U1 offenbart einen zylindrischen Sensor mit einer Gehäusehülse und einer innerhalb der Gehäusehülse angeordneten rohrartigen Innenauskleidung.

Die DE 195 46 865 C1 offenbart einen Magnetfeldgeber mit einem hülsenförmigen Permanentmagneten.

Es ist die Aufgabe der Erfindung, eine Steckerbaugruppe für einen Sensor sowie ein Verfahren zur Montage der Steckerbaugruppe für einen Sensor anzugeben, bei welchem bei minimalem konstruktivem Aufwand die vorgefertigte Baugruppe sowohl von der einen als auch von der anderen Seite in die Gehäusehülse eingeführt werden kann.

Die Aufgabe wird durch eine Steckerbaugruppe für einen Sensor und einem Verfahren zur Montage der Steckerbaugruppe für einen Sensor nach Anspruch 1 bzw. 16 gelöst.

Erfindungsgemäß wird die Aufgabe dadurch gelöst, dass ein Außendurchmesser der Steckereinheit annähernd, bzw. nahezu gleich einem kleinsten Innendurchmesser des hülsenförmigen Gehäuses entspricht, wobei eine Codierhülse beispielsweise in einem Abschnitt des hülsenförmigen Gehäuses zwischen der Steckereinheit und dem hülsenförmigen Gehäuse eingeschoben ist. Aufgrund der annähernd gleichen Durchmesser des Innendurchmessers des hülsenförmigen Gehäuses und des Außendurchmessers der Steckereinheit erfolgt eine zuverlässige Positionierung bzw. Zentrierung der Steckereinheit in dem Gehäuse, wobei je nach Größe des Sensorelements das Gehäuse sowohl von der einen als auch von der anderen Seite bestückt werden kann.Die Codierhülse ermöglicht dabei eine festgelegte Ausrichtung der Steckereinheit zu einem in diese Steckereinheit einzuführenden Gegenstecker und gleichzeitig eine Fixierung der Steckereinheit. Somit wird eine universell verwendbare Steckerbaugruppe für unterschiedliche Sensoren geschaffen.

In einer Ausgestaltung sind das hülsenförmige Gehäuse und die Codierhülse und/oder die Codierhülse und die Steckereinheit kraft- und/oder formschlüssig miteinander verbunden. Der Formschluss zwischen Codierhülse und Gehäuse dient dabei gleichzeitig zur Aufnahme von Drehmoment beim Einlegen eines Gegensteckers. Derselbe Vorteil wird durch die Pressverbindung zwischen Codierhülse und Gehäuse erreicht, wodurch gleichzeitig noch eine Fixierung aneinander möglich ist. Das Gehäuse und die Codierhülse sind dabei mindestens teilweise miteinander verpresst. Durch diese Ausführung sind beim Montageprozess nur zwei Verfahrensschritte notwendig. Die vorteilhafte formschlüssige Verbindung zwischen Codierhülse und Steckereinheit ist für die weitere elektrische Kontaktierung der Steckereinheit bzw. des Gegensteckers von besonderem Vorteil.

In Weiterbildung der Erfindung sind das hülsenförmige Gehäuse und die Codierhülse und/oder die Codierhülse und die Steckereinheit mindestens tangential in Umfangsrichtung der Codierhülse formschlüssig miteinander verbunden. Der tangentiale Formschluss zwischen Codierhülse und Gehäuse dient dabei gleichzeitig zur Aufnahme von Drehmoment beim Einlegen eines Gegensteckers.

In einer weiteren Ausgestaltung weist die Steckereinheit mindestens zwei unterschiedliche Außendurchmesser und/oder das hülsenförmige Gehäuse mindestens zwei unterschiedliche Innendurchmesser auf, wobei die Steckereinheit mit ihrem größten Außendurchmesser an den kleinsten Innendurchmesser des hülsenförmigen Gehäuses anliegt. In diesem Bereich, an dem die Steckereinheit an dem hülsenförmigen Gehäuse anliegt, ist der Abstand zwischen Steckereinheit und hülsenförmigen Gehäuse so gering oder bzw. der Abstand nahezu oder gleich Null, so dass keine andere feste mechanische Komponente an dieser Stelle bzw.

Berührungsstelle zwischen Steckereinheit und dem hülsenförmigen Gehäuse mehr Platz findet. Jedoch sind hier natürlich mechanische Toleranzen zu berücksichtigen. Lediglich eine flexible Dichtung kann vorgesehen sein, wie noch ausgeführt wird. Die Steckereinheit ist nicht über die gesamte Länge durch die Codierhülse von dem hülsenförmigen Gehäuse getrennt, sondern die Steckereinheit liegt an einer Stelle mit dem Außendurchmesser an dem hülsenförmigen Gehäuse an. Verschiedene hülsenförmige Gehäuse können für verschieden große Sensorelemente hergestellt werden. Gleichzeitig wird durch die Positionierung der Codierhülse zwischen dem hülsenförmigen Gehäuse und der Steckereinheit eine zuverlässige Fixierung des Sensorelements im hülsenförmigen Gehäuse gewährleistet.

Vorteilhafterweise bildet der kleinste Innendurchmesser des hülsenförmigen Gehäuses eine Dichtfläche, an welcher eine erste, auf der Steckereinheit angeordnete Dichtung anliegt. Dadurch wird nicht nur ein Aneinanderliegen des hülsenförmigen Gehäuses an der Steckereinheit sichergestellt, sondern gleichzeitig die Abdichtung des hülsenförmigen Gehäuses gegenüber der Umgebung gewährleistet. Dadurch wird eine Abdichtung des Sensorinnenraums gewährleistet.

In einer weiteren Ausführungsform sind entlang des mindestens einen Außendurchmessers der Steckereinheit zwei umlaufende Rillen zur Aufnahme je einer ersten oder zweiten Dichtung ausgebildet, wobei die zweite Dichtung der Codierhülse gegenüberliegend ausgebildet ist, welche eine zweite Dichtfläche für die zweite Dichtung bildet. Durch diese zweite Dichtung wird das Gehäuse zuverlässig gegenüber Feuchtigkeit im Steckerraum abgedichtet.

In Weiterbildung der Erfindung weist die, die Steckereinheit annähernd vollständig umschließende Codierhülse, die von dem hülsenförmigen Gehäuse umgeben ist, ein lokales Codierelement auf.

In einer Variante weist die, die Steckereinheit annähernd vollständig umschließende Codierhülse, die von dem hülsenförmigen Gehäuse umgeben ist, ein lokales Codierelement auf, das axial stufenförmig ausgebildet ist, wobei sich die Stufen in Richtung der Steckereinheit verjüngen. Durch diese Ausgestaltung wird die Steckereinheit formschlüssig in der Codierhülse fixiert.

In einer Ausführungsform weist die Codierhülse an ihrem der Steckereinheit entgegengesetzten Ende eine integrierte Codierrippe zur Ausrichtung eines Gegensteckers auf. Damit wird sichergestellt, dass ein in die Steckerbaugruppe einzuführender Gegenstecker immer die richtige elektrische Verbindung zur Steckereinheit einnimmt.

Um immer die richtige Pinbelegung der Steckereinheit zu gewährleisten, weist die Steckereinheit an mindestens dem kleineren Außendurchmesser eine lokal ausgebildete Codierkerbe auf.

In einer Ausgestaltung bilden das Sensorelement, die eine elektronische Schaltung tragende Trägerplatte und die Steckereinheit eine elektrisch und mechanisch fest verbundene Vorbaugruppe, welche besonders einfach in dem hülsenförmigen Gehäuse montierbar ist. Durch diese Vorbaugruppe werden die Abstände zwischen Sensorelement, elektronischer Schaltung und Steckereinheit beibehalten, so dass sie den Innenraum der hülsenförmigen Gehäuse gut ausfüllen.

In einer weiteren Ausgestaltung deckt ein Abschnitt der Codierhülse eine in dem hülsenförmigen Gehäuse ausgebildete LED-Bohrung von innen ab. Dies hat den Vorteil, dass Hohlräume im Innenraum des hülsenförmigen Gehäuses reduziert werden und somit eine Verschiebung der Vorbaugruppe unterbunden wird.

Vorteilhafterweise ist die LED-Bohrung zwischen den beiden die Steckereinheit umschließenden Dichtungen angeordnet. Dies hat den Vorteil, dass die LED-Bohrung, welche eine Verbindung der Steckerbaugruppe zur Umgebung darstellt, zuverlässig von dichtenden Elementen eingeschlossen ist, so dass das Eindringen von Feuchtigkeit und Verunreinigungen in die Steckerbaugruppe unterbunden wird.

In einer Alternative sind die beiden die Steckereinheit umschließenden Dichtungen auf einer Seite der LED-Bohrung positioniert, wobei die Seite dem Sensorelement zugewandt ist.

In einer weiteren Ausführungsform weist die Steckereinheit eine axiale Durchgangsbohrung zur Befüllung mit einer Vergussmasse auf. Durch Einfüllen einer Vergussmasse in die Steckerbaugruppe wird die Vorbaugruppe, bestehend aus dem Sensorelement, die die elektronische Schaltung tragende Trägerplatte sowie die Steckereinheit in ihrer Lage fest arretiert, so dass ein Lösen von elektrischen Verbindungen unterbunden wird. Gleichzeitig wird das Eindringen von Feuchtigkeit unterbunden.

Eine Weiterbildung der Erfindung betrifft ein Verfahren zur Montage einer Steckerbaugruppe für einen Sensor, bei welchem eine vormontierte Baugruppe, bestehend aus einer Steckereinheit, einer eine elektronische Schaltung tragenden Leiterplatte und einem Sensorelement, entweder von einer Seite oder von der anderen Seite in ein hülsenförmiges Gehäuse eingeführt wird. Bei einem Verfahren, bei welchem bei minimalem konstruktivem Aufwand die vormontierte Baugruppe sowohl von der einen als auch in der anderen Seite in das hülsenförmige Gehäuse einzuführen ist, wird die vormontierte Baugruppe solange in der hülsenförmigen Baugruppe verschoben, bis ein kleinster Innendurchmesser des hülsenförmigen Gehäuses auf dem größten Außendurchmesser der Steckereinheit aufsitzt, wobei die Steckereinheit anschließend mit einer in das hülsenförmige Gehäuse entgegengesetzt zur Trägerplatte eingeführten Codierhülse fixiert wird. Dies hat den Vorteil, dass die tatsächliche Montagerichtung allein von der Baugröße des Sensors bzw. der Baugröße des Sensorelements bestimmt wird. Im Bereich der vor der LED-Bohrung sitzenden Dichtstelle von Gehäuse zur Steckereinheit ist der Durchmesser des Gehäuses am kleinsten und der Außendurchmesser der Steckereinheit am größten, wodurch die Steckereinheit grundsätzlich von beiden Seiten montiert werden kann. Die hohen Kräfte zum Einpressen der Codierhülse in das hülsenförmige Gehäuse werden dabei nur in geringem Maße auf die die elektronische Schaltung tragende Trägerplatte und das Sensorelement übertragen und entsprechen den Montagekräften der Dichtungen, welche somit unkritisch sind.

Vorteilhaft wird die Steckereinheit anschließend durch die in das hülsenförmige Gehäuse entgegengesetzt zur Leiterplatte eingeführten Codierhülse tangential in Umfangsrichtung der Codierhülse lagefixiert.

Vorteilhafterweise wird die Codierhülse mit dem hülsenförmigen Gehäuse verpresst. Durch diese kraftschlüssige Fixierung ist eine zuverlässige Verbindung zwischen Codierhülse und hülsenförmigem Gehäuse möglich.

Die Erfindung lässt zahlreiche Ausführungsformen zu. Eine davon soll anhand der in der Zeichnung dargestellten Figuren näher erläutert werden.

Es zeigen:
- Fig.1: ein Ausführungsbeispiel der zweiteiligen erfindungsgemäßen Steckerbaugruppe vor der Montage,
- Fig.2: eine Ausführungsform der montierten erfindungsgemäßen Steckerbaugruppe,
- Fig.3: ein Ausführungsbeispiel einer Steckereinheit der erfindungsgemäßen Steckerbaugruppe gemäß Fig. 1 und 2,
- Fig.4: ein Ausführungsbeispiel einer Codierhülse der erfindungsgemäßen Steckerbaugruppe gemäß Fig. 1 und 2,
- Fig.5: ein Ausführungsbeispiel eines hülsenförmigen Gehäuses der erfindungsgemäßen Steckerbaugruppe gemäß Fig. 1 und 2,
- Fig.6: ein Ausführungsbeispiel der erfindungsgemäßen Steckerbaugruppe mit einer ersten Baugröße des Sensors,
- Fig.7: ein Ausführungsbeispiel der erfindungsgemäßen Steckerbaugruppe mit einer zweiten Baugröße eines Sensors,
- Fig. 8: ein Ausführungsbeispiel der erfindungsgemäßen Steckerbaugruppe mit einer dritten Baugröße des Sensors.

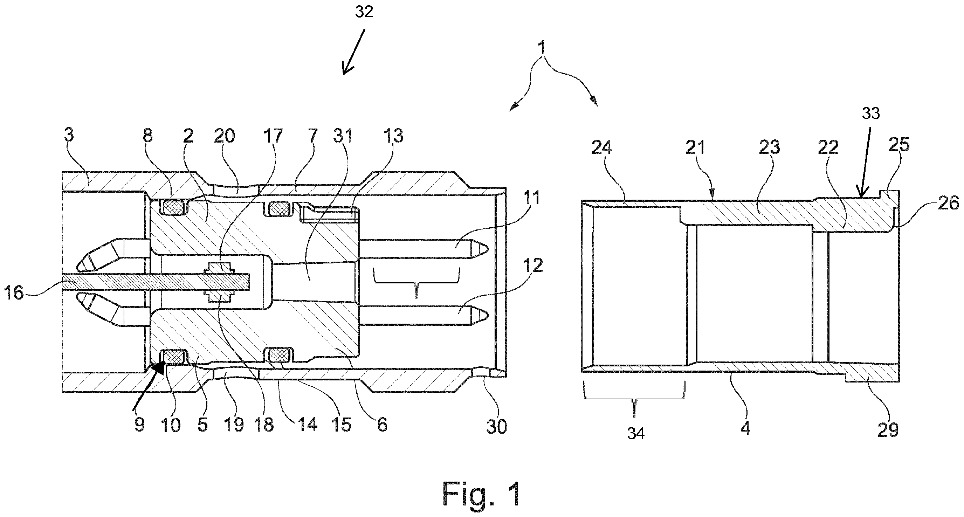

Fig. 1 zeigt ein Ausführungsbeispiel einer erfindungsgemäßen Steckerbaugruppe 1, welche vorzugsweise für einen induktiven Näherungsschalter bzw. Sensor 32 verwendet wird. Die Steckerbaugruppe 1 ist vor ihrer Montage zweiteilig ausgebildet und besteht aus einer Steckereinheit 2, welche in einem hülsenförmigen Gehäuse 3 befestigt ist. Als zweites Teil ist eine Codierhülse 4 vorhanden. Unter dem hülsenförmigen Gehäuse 3 soll im Weiteren ein an beiden Enden offenes Gehäuse mit einem runden Querschnitt verstanden werden.

Die Steckereinheit 2 umfasst gemäß Figur 1 drei Außendurchmesser, wobei ein kleinster Außendurchmesser 6 und ein größter Außendurchmesser 5 dargestellt ist, und dazwischen ein weiterer Außendurchmesser dargestellt ist. Das hülsenförmige Gehäuse 3 weist mindestens zwei unterschiedliche Innendurchmesser 7, 8 auf. Die Steckereinheit 2 ist innerhalb des hülsenförmigen Gehäuses 3 so positioniert, dass der kleinste Innendurchmesser 8 des hülsenförmigen Gehäuses 3 an dem größten Außendurchmesser 5 der Steckereinheit 2 anliegt. Die Steckereinheit 2 weist an dieser Position eine Dichtungsrille 9 auf, die radial umlaufend ausgebildet ist und in welcher eine Dichtung 10 gelagert ist. Somit bildet der innere kleinste Innendurchmesser 8 des hülsenförmigen Gehäuses 3 gleichzeitig eine erste Dichtfläche für die Dichtung 10.

Ausgehend von dem größten Außendurchmesser 5 der Steckereinheit 2 schließt sich ein kleinerer Außendurchmesser 6 an, welcher den Steckerpins 11, 12 zugewandt eine lokal ausgebildete Codierkerbe 13 anschließt. Der Codierkerbe 13 vorgelagert ist eine weitere Dichtungsrille 14, die ebenfalls radial um die Steckereinheit 2 läuft und in welcher eine zweite Dichtung 15 eingelegt ist.

In die Steckereinheit 2 ragt eine Leiterplatte 16, die mit einem Ende fest mit der Steckereinheit 2 verbunden ist. Auf beiden Seiten der Leiterplatte 16 ist je eine LED 17, 18 angeordnet. Diese LEDs 17, 18 senden ihr Licht durch mindestens eine LED-Öffnung 19, 20, die in dem hülsenfömigen Gehäuse 3 ausgebildet und zwischen den beiden Dichtungen 10, 15 positioniert ist. Die elektrische Verbindung der Steckerpins 11, 12 mit der Leiterplatte 16 erfolgt auf der entgegengesetzten Seite der Steckereinheit 2.

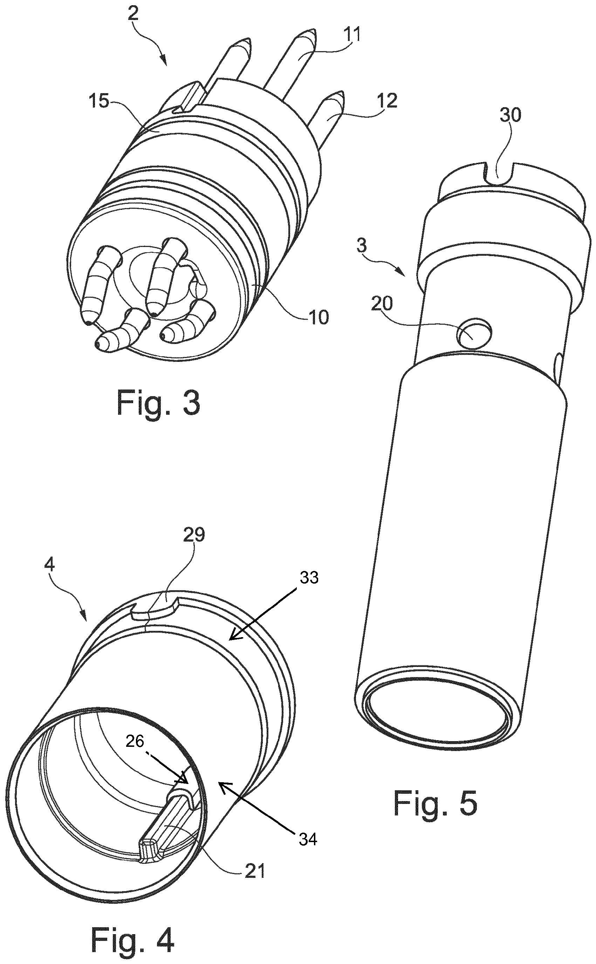

Auch die Codierhülse 4 gemäß Figur 1 und Figur 4 ist ein zylinderförmiges Bauteil, in dessen Innerem sich lokal ein Codierelement 21 axial, ausgehend vom Ende der Codierhülse 4, erstreckt. Dabei ist das Codierelement 21 in seiner axialen Richtung gestuft ausgebildet und weist im vorliegenden Fall beispielsweise zwei Stufen 22 und 23 auf, wobei ein der Steckereinheit 2 zugewandter Abschnitt 24 die dünnste Wandung aufweist. Die Codierhülse weist unterschiedliche Wandstärken auf, wie in Figur 4 dargestellt. Weiter weist die Codierhülse einen Presssitz 33 und einen Dichtsitz 34 auf. Der Dichtsitz ist an dem Abschnitt 24 angeordnet. Der Presssitz 34 ist an der dicksten Wandung, vor dem Kragen 25 angeordnet. An der dicksten Wandung schließt sich nach außen ein Kragen 25 an, welcher eine Dichtfläche für einen nicht weiter dargestellten Gegenstecker bildet. Eine sich radial nach innen an den Kragen 25 anschließende Codierrippe 26, welche in die Stufe 22 integriert ist, dient zur eindeutigen Ausrichtung des Gegensteckers. Die zweite Stufe 23 des Codierelementes 21 wird zur Ausrichtung der Codierhülse 4 zur Steckereinheit 2 genutzt.

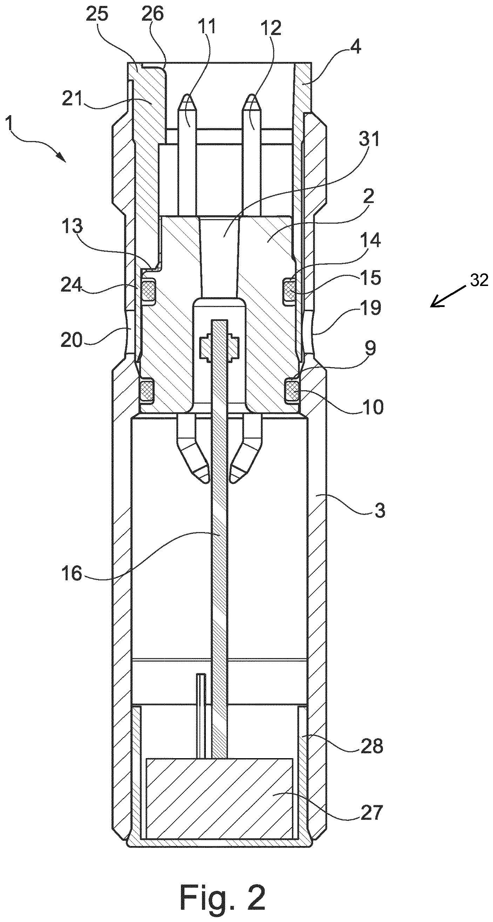

Wie aus Fig. 2, in welcher die Steckerbaugruppe 1 fertig montiert dargestellt ist, ersichtlich, sitzt am freien Ende der Leiterplatte 16 ein Sensorelement 27, wobei das hülsenförmige Gehäuse 3 mit einer Frontkappe 28 abgeschlossen ist. Dabei greift die zweite Stufe 23 des Codierelementes 21 im montierten Zustand in die Codierkerbe 13 der Steckereinheit 2 ein. Der Abschnitt 24 mit der dünnsten Wandung ist zwischen dem hülsenförmigen Gehäuse 3 und der Dichtung 15 fixiert, wobei dieser Abschnitt 24 gleichzeitig die Dichtfläche bzw. den Dichtsitz für die Dichtung 15 bildet. Gleichzeitig schließt der Abschnitt 24 die LED-Öffnung 20 von innen ab, so dass Hohlräume reduziert werden. An dem Presssitz 33 der Codierhülse 4 sind die Codierhülse 4 und das hülsenförmigen Gehäuse 3 miteinander verpresst, um vorteilhafterweise ein Drehmoment vom einzuführenden, nicht weiter dargestellten Gegenstecker aufzunehmen. Ein weiteres Formschlusselement 29 der Codierhülse 4 greift in eine Aussparung 30 des hülsenförmigen Gehäuses 3 ein, was ebenfalls dazu dient, ein Drehmoment vom Gegenstecker aufzunehmen.

Die Leiterplatte 16 und die Innenkontur der Steckereinheit 2 sind idealerweise so gestaltet, dass nur eine ausgerichtete Montage zwischen der Steckereinheit 2 und der Leiterplatte 16 möglich ist, damit eine korrekte Pinbelegung eingehalten wird. Die Steckerpins 11, 12 sind in der Steckereinheit 2 eingepresst, wobei auf der Innenseite des Sensors 27 die gebogenen Steckerpins 11, 12 auf die Leiterplatte 16 gelötet sind. In der Steckereinheit 2 ist zentrisch eine axiale Durchgangsbohrung 31 ausgebildet, welche vorteilhafterweise zwischen den Steckerpins 11, 12 positioniert ist und durch welche eine Vergussmasse in die Steckerbaugruppe 1 eingebracht werden kann, wodurch das Sensorelement 27 und die die elektronischen Bauelemente tragende Leiterplatte 16 in ihrer Position stabilisiert werden.

Die verwendeten Dichtungen 10, 15 können anstelle von O-Ringen auch als Formdichtung oder als 2K-Dichtung ausgeführt sein oder durch entsprechend geformte Dichtrippen aus dem Steckermaterial selbst ausgebildet werden. Die Steckereinheit 2 mit den Stecker-Pins 11, 12 kann dabei durch Umspritzen, durch Einkleben oder eine andere Verbindungstechnik hergestellt werden.

In Fig. 3 ist noch einmal die Steckereinheit 2 perspektivisch dargestellt, wobei insbesondere die Dichtungsrillen 9, 14 mit den beiden Dichtungen 10, 15 hervortreten und die gekrümmte Position der Steckerpins 11, 12 zur Verlötung mit der Leiterplatte 16 dargestellt sind. Wie aus Fig. 4 hervorgeht, ist die Codierhülse 4 ein zylinderförmiges Bauteil, welches nach außen eine zunehmende Wandstärke aufweist. Dabei wird das Codierelement 21 besonders deutlich, welches sich axial innerhalb der Codierhülse 4 erstreckt. Das in Fig. 2 dargestellte hülsenförmige Gehäuse 3 verdeutlicht noch einmal die beiden unterschiedlichen Innendurchmesser 7, 8 dieses Gehäuses 3, wobei an dem kleinsten Innendurchmesser 8 die LED-Bohrungen 19, 20 ausgebildet sind. Figur 4 zeigt das Formschlusselement 29. In die Ausnehmung 30, gemäß Figur 5, greift das Formschlusselement 29 zur Fixierung der Codierhülse 4 an dem hülsenförmigen Gehäuse 3 ein.

Bei der Montage der Steckerbaugruppe 1 wird zuerst das Sensorelement 27 mit der die elektrische Schaltung tragenden Leiterplatte 16 und der Steckereinheit 2 zusammengebaut, so dass diese eine Vorbaugruppe bildet, die entweder von der einen oder von der anderen Seite in das hülsenförmige Gehäuse 3 eingeführt wird. Die Einführrichtung hängt dabei von der Größe des Sensorelements 27 ab. Die Steckerbaugruppe 1 eignet sich für alle in der Automatisierungstechnik gebräuchlichen Größen der Sensoren 32, insbesondere M8, M12, M18 und M30.

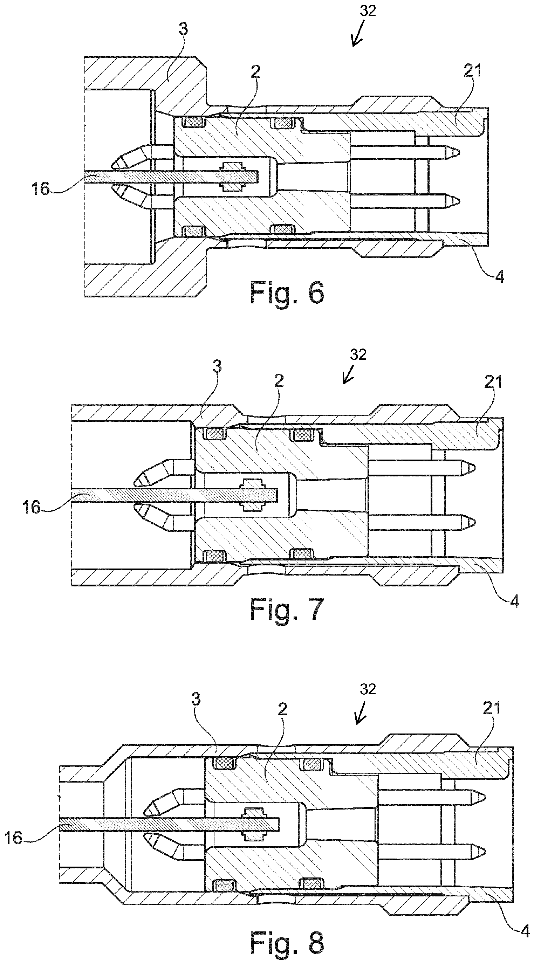

Bei der weiteren Betrachtung wird davon ausgegangen, dass das hülsenförmige Gehäuse eine Größe M12 aufweist. In den Fig. 6 - 8 ist die erfindungsgemäße Steckerbaugruppe 1 im Zusammenhang mit unterschiedlichen Baugrößen der Sensoren 32 dargestellt.

In Fig. 6 weist der Sensor 32 eine Größe M18 bzw. M30 auf, wobei die vorgefertigte die das Sensorelement umfassende Vorbaugruppe von der linken Seite in das hülsenförmige Gehäuse 3 eingeführt wird. Dieses Einführen erfolgt so lange, bis der kleinste Innendurchmesser 8 des hülsenförmigen Gehäuses 3 mit dem größten Außendurchmesser 5 der Steckereinheit 2, welcher die erste Dichtung 10 trägt, in Kontakt treten. Anschließend wird die Codierhülse 4 in der beschriebenen Art und Weise zwischen die Steckereinheit 2 und das hülsenförmige Gehäuse 3 geschoben.

In Figur 7 weist der Sensor 32 eine Größe M12 auf. Wie in Fig. 7 gezeigt, wird die das Sensorelement umfassende Vorbaugruppe von links oder von rechts in das hülsenförmige Gehäuse 3 eingeführt. Auch hier erfolgt die Einführung der vorgefertigten Vorbaugruppe bis zur Positionierung des kleinsten Innendurchmessers 8 des Gehäuses 3 an dem größten Außendurchmesser 5 der Steckereinheit 2.

Wird ein Sensor 32 mit der Größe M8 verwendet, wie in Fig. 8 dargestellt, so kann die Vorbaugruppe von der rechten Seite in das hülsenförmige Gehäuse 3 eingeführt werden, bis der größte Außendurchmesser 5 der Steckereinheit 2 den geringsten Innendurchmesser 8 des hülsenförmigen Gehäuses 3 kontaktiert.

Aufgrund der beschriebenen Ausführungsformen der Steckerbaugruppe 1 ist ein jeweils einteiliges hülsenförmiges Gehäuse für verschiedene Baugrößen der Sensorelemente anwendbar. Eine Montage der Steckereinheit 2 von beiden Richtungen in dem hülsenförmigen Gehäuse 3 ist ohne Beschädigung der Dichtungen 10, 15 möglich. Gleichzeitig erfolgt eine eindeutige Ausrichtung der Leiterplatte, Pinbelegung und Steckercodierung.

### Bezugszeichen:

1 Steckerbaugruppe
2 Steckereinheit
3 hülsenförmiges Gehäuse
4 Codierhülse
5 Außendurchmesser
6 Außendurchmesser
7 Innendurchmesser
8 Innendurchmesser
9 Dichtungsrille
10 Dichtung
11 Steckerpin
12 Steckerpin
13 Codierkerbe
14 Dichtungsrille
15 Dichtung
16 Leiterplatte
17 LED
18 LED
19 LED-Öffnung
20 LED-Öffnung
21 Codierelement
22 Stufe
23 Stufe
24 Abschnitt
25 Kragen
26 Codierrippe
27 Sensorelement
28 Frontkappe
29 Formschlusselement
30 Aussparung
31 Durchgangsbohrung
32 Sensor
33 Presssitz
34 Dichtsitz

## Patentansprüche

1. Steckerbaugruppe für einen Sensor (32), umfassend ein hülsenförmiges Gehäuse (3), in welchem ein Sensorelement (27), eine eine elektronische Schaltung tragende Trägerplatte (16) und eine Steckereinheit (2) als Teil der Steckerbaugruppe positioniert sind, wobei ein Außendurchmesser (5) der Steckereinheit (2) annähernd einem kleinsten Innendurchmesser (8) des hülsenförmigen Gehäuses (3) entspricht, eine Codierhülse (4), zwischen der Steckereinheit (2) und dem hülsenförmigen Gehäuse (3) eingeschoben ist und das Gehäuse (3) mindestens zwei unterschiedliche Innendurchmesser aufweist, **dadurch gekennzeichnet, dass** die Steckereinheit (2) innerhalb des hülsenförmigen Gehäuses (3) so positioniert ist, dass der kleinste Innendurchmesser (8) des hülsenförmigen Gehäuses (3) an dem Außendurchmesser (5) der Steckereinheit (2) anliegt.

2. Steckerbaugruppe nach Anspruch 1, **dadurch gekennzeichnet, dass** das hülsenförmige Gehäuse (3) und die Codierhülse (4) und/oder die Codierhülse (4) und die Steckereinheit (2) kraft- und/oder formschlüssig miteinander verbunden sind.

3. Steckerbaugruppe nach einem der vorhergehenden Ansprüche, **dadurch gekennzeichnet, dass** das hülsenförmige Gehäuse (3) und die Codierhülse (4) und/oder die Codierhülse (4) und die Steckereinheit (2) mindestens tangential in Umfangsrichtung der Codierhülse formschlüssig miteinander verbunden sind.

4. Steckerbaugruppe nach einem der vorhergehenden Ansprüche, **dadurch gekennzeichnet, dass** die Steckereinheit (2) mindestens zwei unterschiedliche Außendurchmesser (5, 6) und/oder das hülsenförmige Gehäuse (3) mindestens zwei unterschiedliche Innendurchmesser (7, 8) aufweist, wobei die Steckereinheit (2) mit ihrem größten Außendurchmesser (5) an dem kleinsten Innendurchmesser (8) des hülsenförmigen Gehäuses (3) anliegt.

5. Steckerbaugruppe nach Anspruch 4, **dadurch gekennzeichnet, dass** der kleinste Innendurchmesser (8) des hülsenförmigen Gehäuses (3) eine Dichtfläche bildet, an welcher eine erste auf der Steckereinheit (2) angeordnete Dichtung (10) anliegt.

6. Steckerbaugruppe nach einem der vorhergehenden Ansprüche, **dadurch gekennzeichnet, dass** entlang des mindestens einen Außendurchmessers (5) der Steckereinheit (2) zwei umlaufende Rillen (9, 14) zur Aufnahme je einer ersten oder zweiten Dichtung (10, 15) ausgebildet sind, wobei die zweite Dichtung (15) der Codierhülse (4) gegenüberliegend angeordnet ist, welche eine zweite Dichtfläche für die zweite Dichtung (15) bildet.

7. Steckerbaugruppe nach mindestens einem der vorhergehenden Ansprüche, **dadurch gekennzeichnet, dass** die die Steckereinheit (2) annähernd vollständig umschließende Codierhülse (4), die von dem hülsenförmigen Gehäuse (3) umgeben ist, ein lokales Codierelement (21) aufweist.

8. Steckerbaugruppe nach mindestens einem der vorhergehenden Ansprüche, **dadurch gekennzeichnet, dass** die die Steckereinheit (2) annähernd vollständig umschließende Codierhülse (4), die von dem hülsenförmigen Gehäuse (3) umgeben ist, ein lokales Codierelement (21) aufweist, das axial stufenförmig ausgebildet ist, wobei sich die Stufen (22, 23) in Richtung der Steckereinheit (2) verjüngen.

9. Steckerbaugruppe nach einem der vorhergehenden Ansprüche, **dadurch gekennzeichnet, dass** die Codierhülse (4) an ihrem, der Steckereinheit (2) entgegengesetzten Ende eine integrierte Codierrippe (26) zur Ausrichtung eines Gegensteckers aufweist.

10. Steckerbaugruppe nach einem der vorhergehenden Ansprüche, **dadurch gekennzeichnet, dass** die Steckereinheit (2) an mindestens dem Außendurchmesser, insbesondere kleineren Außendurchmesser (6) eine lokal ausgebildete Codierkerbe (13) aufweist.

11. Steckerbaugruppe nach mindestens einem der vorhergehenden Ansprüche, **dadurch gekennzeichnet, dass** das Sensorelement (27), die die elektronische Schaltung tragende Leiterplatte (16) und die Steckereinheit (2) eine elektrisch und mechanisch fest verbundene Vorbaugruppe bilden.

12. Steckerbaugruppe nach mindestens einem der vorhergehenden Ansprüche, **dadurch gekennzeichnet, dass** ein Abschnitt (24) der Codierhülse eine in dem hülsenförmigen Gehäuse (3) ausgebildete LED-Bohrung (20) von innen abdeckt.

13. Steckerbaugruppe nach Anspruch 12, **dadurch gekennzeichnet, dass** die LED-Bohrung (20) zwischen den beiden die Steckereinheit (2) umschließenden Dichtungen (10, 15) angeordnet ist.

14. Steckerbaugruppe nach Anspruch 12, **dadurch gekennzeichnet, dass** die beiden die Steckereinheit (2) umschließenden Dichtungen (10, 15) auf einer Seite der LED-Bohrung (20) positioniert sind, wobei die Seite dem Sensorelement (27) zugewandt ist.

15. Steckerbaugruppe nach mindestens einem der vorhergehenden Ansprüche, **dadurch gekennzeichnet, dass** die Steckereinheit (2) eine axiale Durchgangsbohrung (31) zur Befüllung mit einer Vergussmasse aufweist.

16. Verfahren zur Montage einer Steckerbaugruppe für einen Sensor, bei welchem eine vormontierte Baugruppe, bestehend aus einer Steckereinheit (2), einer eine elektronische Schaltung tragenden Trägerplatte (16) und einem Sensorelement (27), entweder von einer Seite oder der anderen Seite in ein hülsenförmiges Gehäuse (3) eingeführt wird, wobei die vormontierte Baugruppe (2, 16, 27) so lange in dem hülsenförmigen Gehäuse (3) verschoben wird, bis ein kleinster Innendurchmesser (8) des hülsenförmigen Gehäuses (3) auf einem größten Außendurchmesser (5) der Steckereinheit (2) aufsitzt, wobei die Steckereinheit (2) anschließend mit einer in das hülsenförmige Gehäuse (3) entgegengesetzt zur Leiterplatte (16) eingeführten Codierhülse (4) fixiert wird und das Gehäuse (3) mindestens zwei unterschiedliche Innendurchmesser aufweist, wobei die Steckereinheit (2) innerhalb des hülsenförmigen Gehäuses (3) so positioniert wird, dass der kleinste Innendurchmesser (8) des hülsenförmigen Gehäuses (3) an dem Außendurchmesser (5) der Steckereinheit (2) anliegt.

17. Verfahren nach Anspruch 16, **dadurch gekennzeichnet, dass** die die Steckereinheit (2) mit einer in das hülsenförmige Gehäuse (3) entgegengesetzt zur Leiterplatte (16) eingeführten Codierhülse (4) tangential in Umfangsrichtung der Codierhülse (4) lagefixiert wird.

18. Verfahren nach Anspruch 16, **dadurch gekennzeichnet, dass** die Codierhülse (4) mit dem hülsenförmigen Gehäuse (3) verpresst wird.

## Claims

1. A plug-in module for a sensor (32) comprising a sleeve-like housing (3) in which a sensor element (27), a carrier board (16) carrying an electronic circuit and a plug-in unit (2) as part of the plug-in module are positioned, wherein an outer diameter (5) of the plug-in unit (2) approximately corresponds to a smallest inner diameter (8) of the sleeve-like housing (3), and wherein a coding sleeve (4) is inserted between the plug-in unit (2) and the sleeve-like housing (3) and the housing (3) has at least two different inner diameters, **characterized in that** the plug-in unit (2) is positioned within the sleeve-like housing (3) such that the smallest inner diameter (8) of the sleeve-like housing (3) contacts the outer diameter (5) of the plug-in unit (2).

2. A plug-in module in accordance with claim 1, **characterized in that** the sleeve-like housing (3) and the coding sleeve (4) and/or the coding sleeve (4) and the plug-in unit (2) are connected to one another in a force-transmitting or shape-matching manner.

3. A plug-in module in accordance with one of the preceding claims, **characterized in that** the sleeve-like housing (3) and the coding sleeve (4) and/or the coding sleeve (4) and the plug-in unit (2) are connected to one another in a shape-matched manner at least tangentially in the peripheral direction of the coding sleeve.

4. A plug-in module in accordance with any one of the preceding claims, **characterized in that** the plug-in unit (2) has at least two different outer diameters (5, 6) and/or the sleeve-like housing (3) has at least two different inner diameters (7, 8), with the largest outer diameter (5) of the plug-in unit (2) contacting the smallest inner diameter (8) of the sleeve-like housing (3).

5. A plug-in module in accordance with claim 4, **characterized in that** the smallest inner diameter (8) of the sleeve-like housing (3) forms a sealing surface which a first seal (10) arranged at the plug-in unit (2) contacts.

6. A plug-in module in accordance with any one of the preceding claims, **characterized in that** two peripheral grooves (9, 14) for receiving a respective first or second seal (10,1 5) are formed along the at least one outer diameter (5) of the plug-in unit (2), with the second seal (15) being arranged opposite the coding sleeve (4) which forms a second sealing surface for the second seal (15).

7. A plug-in module in accordance with at least one of the preceding claims, **characterized in that** the coding sleeve (4) which approximately completely surrounds the plug-in unit (2) and which is surrounded by the sleeve-like housing (3) has a local coding element (21).

8. A plug-in module in accordance with at least one of the preceding claims, **characterized in that** the coding sleeve (4) which approximately completely surrounds the plug-in unit (2) and which is surrounded by the sleeve-like housing (3) has a local coding element (21) which is formed in axially stepped form, with the steps (22, 23) tapering in the direction of the plug-in unit (2).

9. A plug-in module in accordance with any one of the preceding claims, **characterized in that** the coding sleeve (4) has an integrated coding rib (26) for aligning a mating plug at its end opposite the plug-in unit (2).

10. A plug-in module in accordance with any one of the preceding claims, **characterized in that** the plug-in unit (2) has a locally formed coding notch (13) at at least the outer diameter, in particular at the smaller outer diameter (6).

11. A plug-in module in accordance with at least one of the preceding claims, **characterized in that** the sensor element (27), the circuit board (16) carrying the electronic circuit and the plug-in unit (2) form an electrically and mechanically fixedly connected pre-assembly.

12. A plug-in module in accordance with at least one of the preceding claims, **characterized in that** a section (24) of the coding sleeve covers an LED bore (20) from the inside, with the LED bore being formed in the sleeve-like housing (3).

13. A plug-in module in accordance with claim 12, **characterized in that** the LED bore (20) is arranged between the two seals (10, 15) surrounding the plug-in unit (2).

14. A plug-in module in accordance with claim 12, **characterized in that** the two seals (10, 15) surrounding the plug-in unit (2) are positioned at one side of the LED bore (20), with the side facing the sensor element (27).

15. A plug-in module in accordance with at least one of the preceding claims, **characterized in that** the plug-in unit (2) has an axial passage bore (31) for filling with a compound.

16. A method of installing a plug-in module for a sensor in which a pre-installed assembly comprising a plug-in unit (2), a carrier board (16) carrying an electronic circuit and a sensor element (27) is introduced into a sleeve-like housing (3) either from one side or from the other side, wherein the pre-installed assembly (2, 16, 27) is displaced in the sleeve-like housing (3) for so long until a smallest inner diameter (8) of the sleeve-like housing (3) is seated on a largest outer diameter (5) of the plug-in unit (2), with the plug-in unit (2) subsequently being fixed by a coding sleeve (4) introduced into the sleeve-like housing (3) opposite to the circuit board (16), and wherein the housing (3) has at least two different inner diameters with the plug-in unit (2) being positioned within the sleeve-like housing (3) such that the smallest inner diameter (8) of the sleeve-like housing (3) contacts the outer diameter (5) of the plug-in unit (2).

17. A method in accordance with claim 16, **characterized in that** the plug-in unit (2) is positionally fixed tangentially in the peripheral direction of a coding sleeve (4) by the coding sleeve (4) introduced into the sleeve-like housing (3) opposite to the circuit board (16).

18. A method in accordance with claim 16, **characterized in that** the coding sleeve (4) is pressed with the sleeve-like housing (3).

## Revendications

1. Ensemble connecteur pour un capteur (32), comportant un boîtier (3) en forme de douille dans lequel sont positionnés un élément capteur (27), un panneau porteur (16) portant un circuit électronique et une unité formant connecteur (2) faisant partie de l'ensemble connecteur, dans lequel un diamètre extérieur (5) de l'unité formant connecteur (2) correspond approximativement à un diamètre intérieur (8) le plus petit du boîtier (3) en forme de douille, une douille de codage (4) est insérée entre l'unité formant connecteur (2) et le boîtier (3) en forme de douille, et le boîtier (3) présente au moins deux diamètres intérieurs différents, **caractérisé en ce que** l'unité formant connecteur (2) est positionnée à l'intérieur du boîtier (3) en forme de douille de telle sorte que le plus petit diamètre intérieur (8) du boîtier en forme de douille (3) prend appui contre le diamètre extérieur (5) de l'unité formant connecteur (2).

2. Ensemble connecteur selon la revendication 1, **caractérisé en ce que** le boîtier (3) en forme de douille et la douille de codage (4) et/ou la douille de codage (4) et l'unité formant connecteur (2) sont reliés l'un à l'autre par coopération de forces et/ou de formes.

3. Ensemble connecteur selon l'une des revendications précédentes, **caractérisé en ce que** le boîtier (3) en forme de douille et la douille de codage (4) et/ou la douille de codage (4) et l'unité formant connecteur (2) sont reliés l'un à l'autre par coopération de formes au moins tangentiellement en direction périphérique de la douille de codage.

4. Ensemble connecteur selon l'une des revendications précédentes, **caractérisé en ce que** l'unité formant connecteur (2) présente au moins deux diamètres extérieurs différents (5, 6) et/ou le boîtier (3) en forme de douille présente au moins deux diamètres intérieurs différents (7, 8), l'unité formant connecteur (2) prenant appui par son plus grand diamètre extérieur (5) contre le plus petit diamètre intérieur (8) du boîtier (3) en forme de douille.

5. Ensemble connecteur selon la revendication 4, **caractérisé en ce que** le plus petit diamètre intérieur (8) du boîtier (3) en forme de douille constitue une surface d'étanchéité contre laquelle prend appui un premier joint d'étanchéité (10) agencé sur l'unité formant connecteur (2).

6. Ensemble connecteur selon l'une des revendications précédentes, **caractérisé en ce que** deux rainures périphériques (9, 14) destinées à loger chacune un premier ou un second joint d'étanchéité (10, 15) sont ménagées le long dudit au moins un diamètre extérieur (5) de l'unité formant connecteur (2), le second joint d'étanchéité (15) étant agencé en regard de la douille de codage (4) qui constitue une seconde surface d'étanchéité pour le second joint d'étanchéité (15).

7. Ensemble connecteur selon l'une des revendications précédentes, **caractérisé en ce que** la douille de codage (4) entourant approximativement complètement l'unité formant connecteur (2) et entourée par le boîtier (3) en forme de douille comprend un élément de codage local (21).

8. Ensemble connecteur selon l'une des revendications précédentes, **caractérisé en ce que** la douille de codage (4) entourant approximativement complètement l'unité formant connecteur (2) et entourée par le boîtier (3) en forme de douille comprend un élément de codage local (21) qui est réalisé axialement sous forme étagée, les étages (22, 23) allant en se rétrécissant en direction de l'unité formant connecteur (2).

9. Ensemble connecteur selon l'une des revendications précédentes, **caractérisé en ce que** à son extrémité opposée à l'unité formant connecteur (2), la douille de codage (4) comprend une nervure de codage intégrée (26) pour orienter un connecteur complémentaire.

10. Ensemble connecteur selon l'une des revendications précédentes, **caractérisé en ce que** l'unité formant connecteur (2) comprend une échancrure de codage (13) réalisée localement au moins sur le diamètre extérieur, en particulier sur le petit diamètre extérieur (6).

11. Ensemble connecteur selon l'une des revendications précédentes, **caractérisé en ce que** l'élément capteur (27), la carte à circuits imprimés (16) portant le circuit électronique et l'unité formant connecteur (2) constituent un groupe pré-assemblé électriquement et mécaniquement solidaire.

12. Ensemble connecteur selon l'une des revendications précédentes, **caractérisé en ce que** une portion (24) de la douille de codage (4) recouvre depuis l'intérieur un perçage à LED (20) ménagé dans le boîtier (3) en forme de douille.

13. Ensemble connecteur selon la revendication 12, **caractérisé en ce que** le perçage à LED (20) est disposé entre les deux joints d'étanchéité (10, 15) entourant l'unité formant connecteur (2).

14. Ensemble connecteur selon la revendication 12, **caractérisé en ce que** les deux joints d'étanchéité (10, 15) entourant l'unité formant connecteur (2) sont positionnés sur un côté du perçage à LED (20), le côté étant tourné vers l'élément capteur (27).

15. Ensemble connecteur selon l'une des revendications précédentes, **caractérisé en ce que** l'unité formant connecteur (2) présente un perçage traversant axial (31) destiné au remplissage avec une masse de scellement.

16. Procédé de montage d'un ensemble connecteur pour un capteur, dans lequel un ensemble pré-assemblé constitué d'une unité formant connecteur (2), d'un panneau porteur (16) portant un circuit électronique et d'un élément capteur (27) est introduit soit depuis un côté soit depuis l'autre côté dans un boîtier (3) en forme de douille, dans lequel l'ensemble pré-assemblé (2, 16, 27) est déplacé dans le boîtier (3) en forme de douille jusqu'à ce qu'un diamètre intérieur (8) le plus petit du boîtier (3) en forme de douille vienne reposer sur un diamètre extérieur (5) le plus grand de l'unité formant connecteur (2), l'unité formant connecteur (2) étant ensuite fixée avec une douille de codage (4) introduite dans le boîtier (3) en forme de douille en sens opposé à la carte à circuits imprimés (16), et le boîtier (3) présente au moins deux diamètres intérieurs différents, l'unité formant connecteur (2) étant positionnée à l'intérieur du boîtier (3) en forme de douille de telle sorte que le plus petit diamètre intérieur (8) du boîtier (3) en forme de douille prend appui contre le diamètre extérieur (5) de l'unité formant connecteur (2).

17. Procédé selon la revendication 16, **caractérisé en ce que** l'unité formant connecteur (2) est fixée dans sa position avec une douille de codage (4) introduite dans le boîtier (3) en forme de douille en sens opposé à la carte à circuits imprimés (16), tangentiellement en direction périphérique de la douille de codage (4).

18. Procédé selon la revendication 16, **caractérisé en ce que** la douille de codage (4) est assemblée par pressage avec le boîtier (3) en forme de douille.
